# EUROPEAN PATENT SPECIFICATION

(11) **EP 1 100 711 B1**
(45) Date of publication and mention of the grant of the patent: **12.09.2007**
(21) Application number: 98967166.4
(22) Date of filing: 02.07.1998
(51) Int. Cl.: B62D 11/04

(54) **DRIVING APPARATUS FOR SPEED CHANGING AND STEERING OF A VEHICLE**
ANTRIEBSVORRICHTUNG ZUR GESCHWINDIGKEITSÄNDERUNG UND LENKUNG EINES FAHRZEUGES
APPAREIL D'ENTRAINEMENT POUR CHANGER LES VITESSES ET DIRIGER UN VEHICULE

(43) Date of publication of application: 23.05.2001
(73) Proprietor: Tuff Torq Corporation, Morristown, TN 37814-1051 (US)
(72) Inventor: ABEND, Robert, Morristown, TN 37814-1051 (US); STOLL, Kerwyn, Morristown, TN 37814-1051 (US)
(74) Representative: Henkel, Feiler & Hänzel
(86) International application number: PCT/US1998/013811
(87) International publication number: WO 2000/001569

(56) References cited:
- US-A- 2 936 033
- US-A- 3 907 051
- US-A- 4 809 796
- US-A- 4 882 947
- US-A- 4 895 052
- US-A- 5 052 511
- US-A- 5 505 279
- US-A- 5 553 453

## Description

### Background of the Invention

### Field of the Invention

The present invention relates to a vehicle according to the preamble portion of claim 1 with a driving apparatus for speed changing and steering comprising a pair of transmissions for driving a pair of left and right axles, wherein one of the pair is used for steering and the other is used for speed changing in advancing and reversing.

### Related Art

U.S Pat. No. 4,782,650, for example, describes a vehicle provided with a pair of hydrostatic transmissions (hereinafter referred to as HSTs), which are disposed in a lateral row and are connected with each other, and left and right axles projecting respectively from the pair of the HSTs laterally outwardly. Driving wheels are fixed respectively onto utmost ends of the axles. The left and right axles are driven respectively by changing operation of slanting angles of movable swash plates of the pair of HSTs.

The left and right axles are driven at the same speed by the pair of HSTs in case of straight advancing and reversing. They are driven at different speeds in case of steering.

However, because the above mentioned conventional vehicle uses a different HST to drive each axle, it can advance or reverse straight only when the output rotational speeds of the pair of the HSTs are equal. Thus, each of the HSTs needs to be adjusted with respect to its output speed for a long time while in operation. Additionally, accuracy is required to produce parts of the HSTs to minimize different outputs between them. For example, if there is a difference in volume between hydraulic pumps or motors of the pair of the HSTs, feelings both in turning left and right are different from each other, thus the vehicle becomes hard to control.

Additionally, the above-described conventional vehicle is laterally wide because the pair of HSTs are laterally disposed between the left and right driving wheels.

Furthermore, a speed changing operating tool, such as a speed change pedal, is connected respectively to both output regulating members of the pair of HSTs. A steering operating tool, such as a steering wheel, is also connected to both HSTs. This results in complicated linkages between the speed changing operating tool and the both output regulating members, and between the steering operating tool and the both output regulating members. Thus, the cost for production of the linkages and the space required for them in the vehicle are increased. These linkages also require a more complicated control system for a steering wheel and a speed changing pedal.

Other conventional vehicles control steering using steered front wheels. These vehicles, however, have a large turning radius which is inefficient when operating in crowded areas. For example, when mowing lawn near trees, steered front wheels are inefficient because it takes several passes in order to complete the area adjacent to a single tree.

US-A-4882947 discloses a vehicle on which the preamble portion of claim 1 is based. This vehicle is a track laying vehicle with a first driving unit for driving the tracks of the vehicle, whereby the first driving unit includes a mechanical transmission driving driving axles. A second driving unit is provided for steering the vehicle and the second driving unit includes a hydrostatic transmission driving steering output shafts. First and second drive trains are provided interlocking the driving axle and steering output shaft of one side with each other so as to rotate in the same direction while interlocking the driving axle and the steering output shaft of the other side of the vehicle with each other so as to rotate in opposite directions.

### SUMMARY OF THE INVENTION

It is an object of the present invention to provide a compact, low production cost vehicle including a driving apparatus that enables the vehicle to be operated in a straight line without requiring adjustment to equalize the output of the driving unit and which has a small turning radius.

To solve this object the present invention provides a vehicle as defined in claim 1. Preferred embodiments are defined in the dependent claims and are explained below.

In one such a construction, an output regulating member of the first HST is connected with a speed changing operating tool, such as a foot pedal, to be used for speed changing in advancing and reversing. The driving wheels are attached to the first differential output shafts. The output regulating member of the second HST is connected with a steering operating tool, such as a steering wheel, to be used for steering.

Accordingly, the vehicle can spin or turn at a small radius. Also, the first differential output shafts projecting laterally from the single first driving unit can be used as left and right driving axles, so that the left and right axles do not need to be adjusted to equalize their speed, thereby simplifying the work when operating the vehicle in forward or reverse. Additionally, in a vehicle with multiple wheels, only the differential drive of the pair of driving wheels attached to the first differential output shafts is required for steering, thereby allowing a vehicle with multiple wheels to have simple driven wheels.

The speed of advancing and reversing of the vehicle can be steplessly changed by operation of the speed changing operating tool (the foot pedal) easily because of the stepless output regulation of the first HST. The vehicle can also be steered smoothly and easily by operation of the steering operating tool (the steering wheel) because of the stepless output regulation of the second HST.

The linkage between the speed changing operating tool and the output regulating member of the first HST and the linkage between the steering operating tool and the output regulating member of the second HST are simple and compact. These linkages are compactly disposed below an operator's deck.

The first and second driving units are attached to a vehicle chassis so as to be juxtaposed in either front or rear of each other, thereby enabling the vehicle provided with the driving apparatus to be laterally narrow. Thus, the vehicle can be compact and can have a very small turning circle in addition to the above mentioned drive trains.

With regard to the transmitting mechanism between an output shaft of the prime mover and the input shafts of the first and second HSTs of the first and second driving units, the output shaft is disposed between the input shafts of the first and second HST. Pulleys fixed onto the output shaft of the prime mover and the two input shafts of the first and second HSTs are bound with a single belt. Accordingly, the space required for the transmitting mechanism is small, thereby allowing for a more compact vehicle and the cost of production thereofis reduced because due to the use of a single belt.

The prime mover is an engine having a vertically axial crankshaft. The output shaft of the engine is vertically axially disposed such that the transmitting mechanism is between the output shaft of the engine and the input shafts of the first and second HSTs.

In a preferred embodiment, since an HST unit and a differential gear unit separate from each other are widely produced at low cost because of their simple structures, that the driving apparatus constructed by assembly of them can be reduced in cost.

Furthermore, a mower unit is provided to the vehicle with a driving apparatus of the present invention. The vehicle can spin or turn at a small radius beside or among trees or buildings, thereby enabling the lawn mowing to be performed efficiently.

These and other objects of the invention will become more apparent in the detailed description and examples which follows.

### Brief Description of the Figures

FIG. 1 is a side view showing an entire lawn tractor provided with a driving apparatus of the present invention;
FIG. 2 is a plan view of a pair of driving units disposed in a longitudinal row;
FIG. 3 is a right side view of a pair of driving units disposed in a longitudinal row;
FIG. 4 is a left side view a pair of driving units disposed in a longitudinal row;
FIG. 5 is a sectional plan view a pair of driving units disposed in a longitudinal row;
FIG. 6 is a diagram of a power transmitting system of the driving apparatus;
FIG. 7 is a side view showing another entire lawn tractor provided with the driving apparatus of the present invention, wherein a seat is mounted above the driving apparatus;
FIG. 8 is a side view showing another entire lawn tractor provided with the driving apparatus of the present invention, wherein a mower unit is provided in front of the vehicle thereof, and
FIG. 9 is a diagram of a power transmitting system of another driving apparatus of the present invention comprising a pair of driving units, wherein each driving unit includes an HST unit and an differential gear unit separated from each other.

### Detailed Description of the Preferred Embodiments

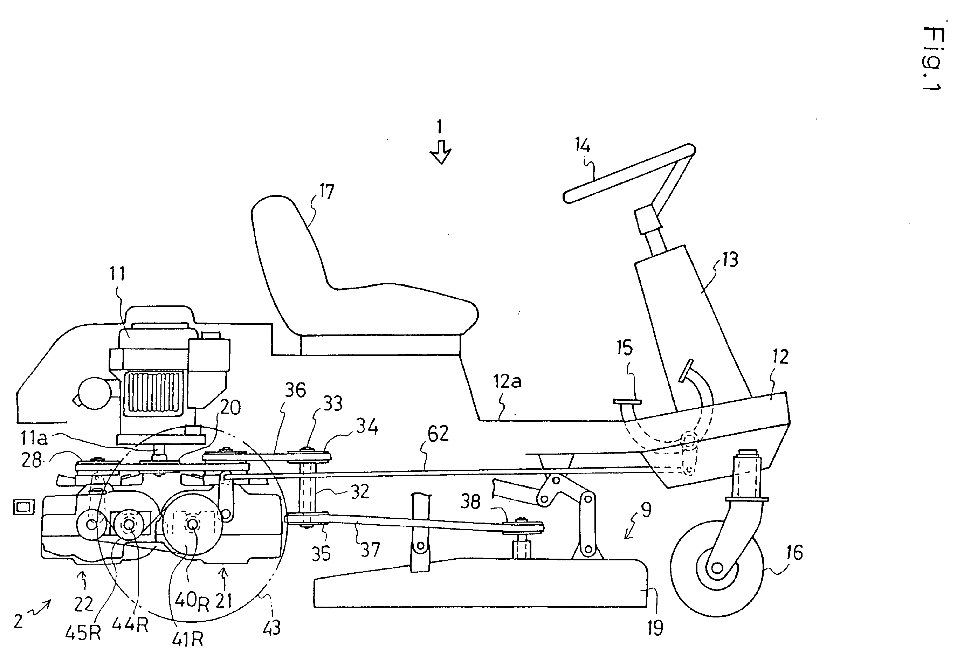

As best seen in FIG. 1, the overall construction of a lawn tractor 1 provided with a driving apparatus of the present invention will be explained.

A front column 13 is provided upright on a front portion of a vehicle chassis 12. A steering wheel 14 as a steering operating tool projects upwardly from front column 13. A speed change pedal 15 and brake pedals (not shown) are disposed beside front column 13. A pair of front wheels 16 are disposed respectively on both lateral sides of the front lower portion of vehicle chassis 12. Front wheels 16 are caster wheels having substantially vertical pivots, so that they can be horizontally rotated smoothly so as to be rapidly oriented toward the aiming direction when the vehicle turns by differential driving of left and right driving wheels. Thus, the feeling in steering of the vehicle can be improved. A single front wheel 16 or more than two front wheels 16 may be also used.

A seat 17 is mounted on a center portion of vehicle chassis 12. A deck portion 12a is formed as an operator's footboard on an upper end of vehicle chassis 12 in the vicinity of a front of seat 17. A mower unit 9 (a mower) is disposed below deck portion 12a. Mower unit 9 comprises a casing 19 provided therein with at least one rotary blade, which is driven by power from an engine 11 through pulleys, belt and the like. Mower unit 9 is suspended at front and rear portions of its casing 19 by linkages which are vertically movable.

Engine 11 is mounted on a rear portion of vehicle chassis 12 and is covered with a bonnet. Engine 11 has a vertically axial crankshaft provided with a vertically downwardly projecting output shaft 11a. An output pulley 20 is fixed onto a lower end of output shaft 11a.

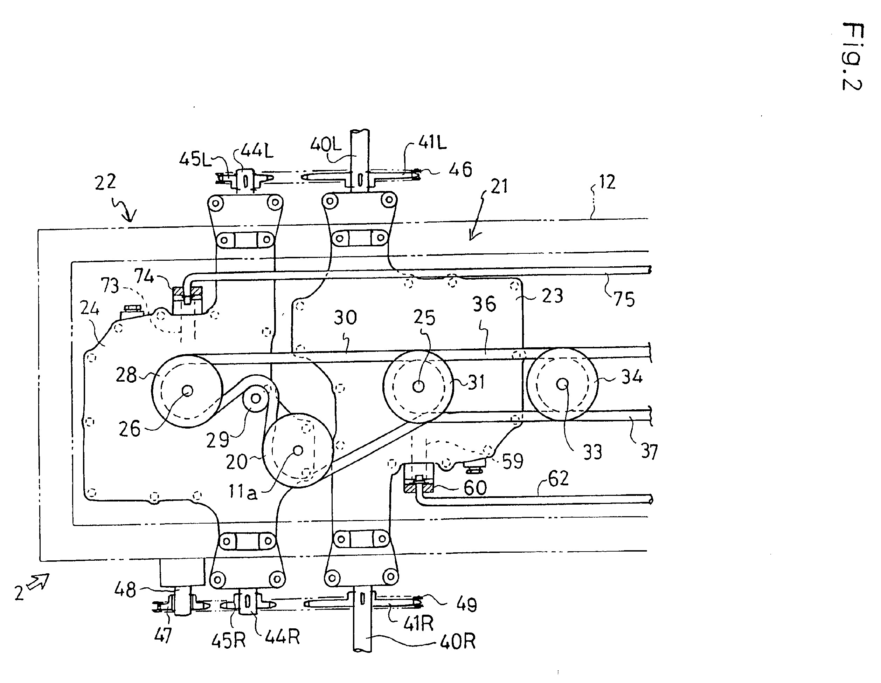

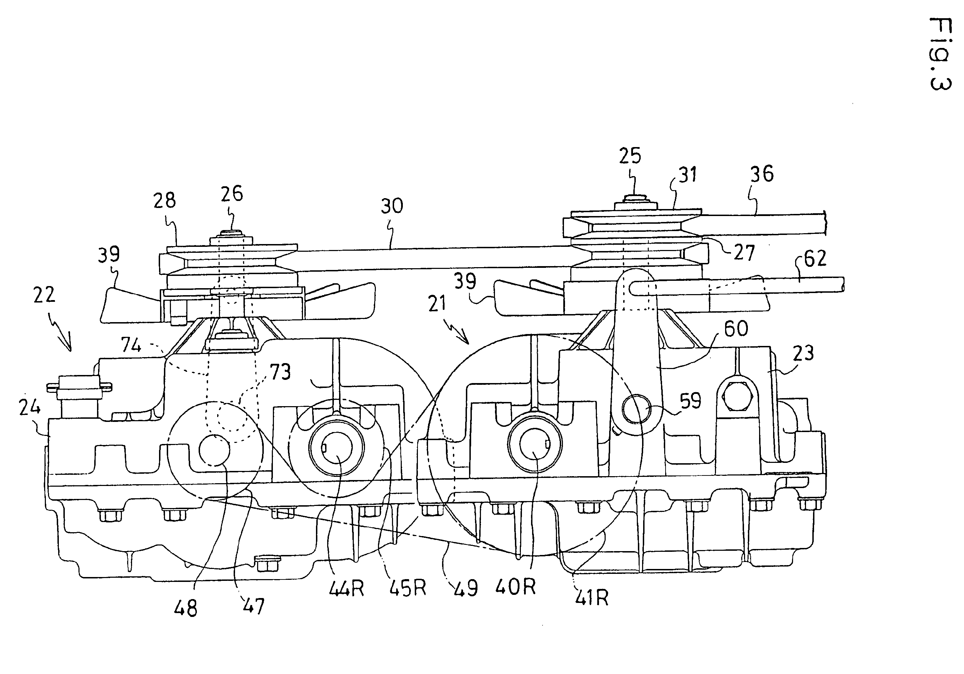

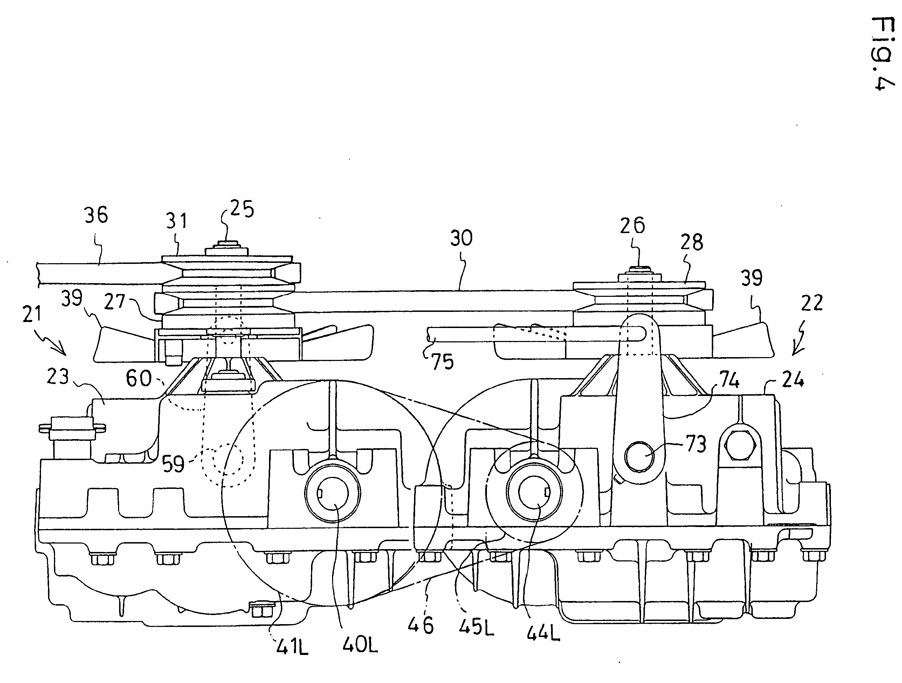

A driving apparatus 2 of the present invention is disposed on the lower rear portion of vehicle chassis 12. As shown in FIGs. 2, 3 and 4, driving apparatus 2 consists of a first driving unit 21 for speed changing in advancing and reversing and a second driving unit 22 for steering, which contain substantially similarly constructed hydrostatic transmissions (HSTs), respectively. Second driving unit 22 is preferably disposed in rear of first driving unit 21. They are oriented in longitudinally opposite directions and are fixed to vehicle chassis 12. Second driving unit 22 alternatively may be disposed in front of first driving unit 21.

A first input shaft 25 projects from a housing 23 of first driving unit 21 and a second input shaft 26 projects from a housing 24 of second driving unit 22. A first input pulley 27 and a fan 39 is fixed onto first input shaft 25 and a second input pulley 28 and another fan 39 is fixed onto second input shaft 26. Output pulley 20 and a tension pulley 29 are disposed in a space between first and second input pulleys 27 and 28. All the pulleys 20, 27 and 28 are tied together with a single belt 30, so that first and second input shafts 25 and 26 can receive the power of engine 11 simultaneously. Tension pulley 29 is pushed against belt 30.

Another pulley 31 is fixed onto first input shaft 25. A support boss 32 is provided upright on a longitudinal intermediate of vehicle chassis 12. A counter shaft 33 rotatably penetrates support boss 32. For the purpose of driving of mower unit 9, pulleys 34 and 35 are fixed onto both upper and lower ends of counter shaft 33, and a belt 36 are interposed between pulleys 31 and 34. A belt tension clutch may be disposed between pulleys 35 and 38, thereby enabling mower unit 9 to be drivingly switched on and off.

A pair of first differential output shafts (axles) 40L and 40R project respectively from both lateral sides of housing 23 of first driving unit 21. Sprockets 41L and 41R are fixed respectively onto first differential output shafts 40L and 40R. Rear wheels 43 are fixed respectively onto first differential output shafts 40L and 40R so as to be disposed outside of sprockets 41L and 41R, respectively.

With respect to the conventional vehicle provided with a pair of driving units disposed in lateral row, left and right driving axles are independently driven by the pair of driving units, which are separated from each other, thereby requiring output of the driving units to be equalized for straight advancing and reversing of the vehicle. However, the vehicle of the present invention is constructed so that the left and right axles constituted by first differential output shafts 40L and 40R are differentially connected with each other by a single differential gear unit within housing 23 of first driving unit 21, thereby requiring no adjustment to equalize the output of the axles.

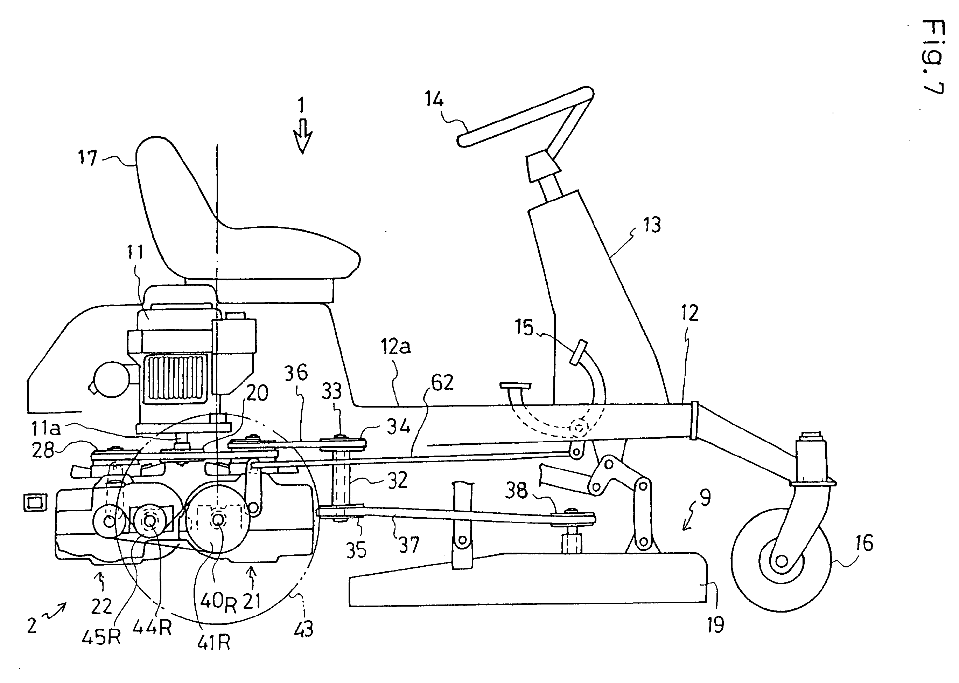

Vehicle 1 turns substantially around either rear wheel 43. As shown in FIG. 7, seat 17 may also be disposed just above first differential output shafts 40L and 40R. This places seat 17 vertically in line with rear wheels 43, thereby reducing the force on an operator when vehicle 1 is turned or spun.

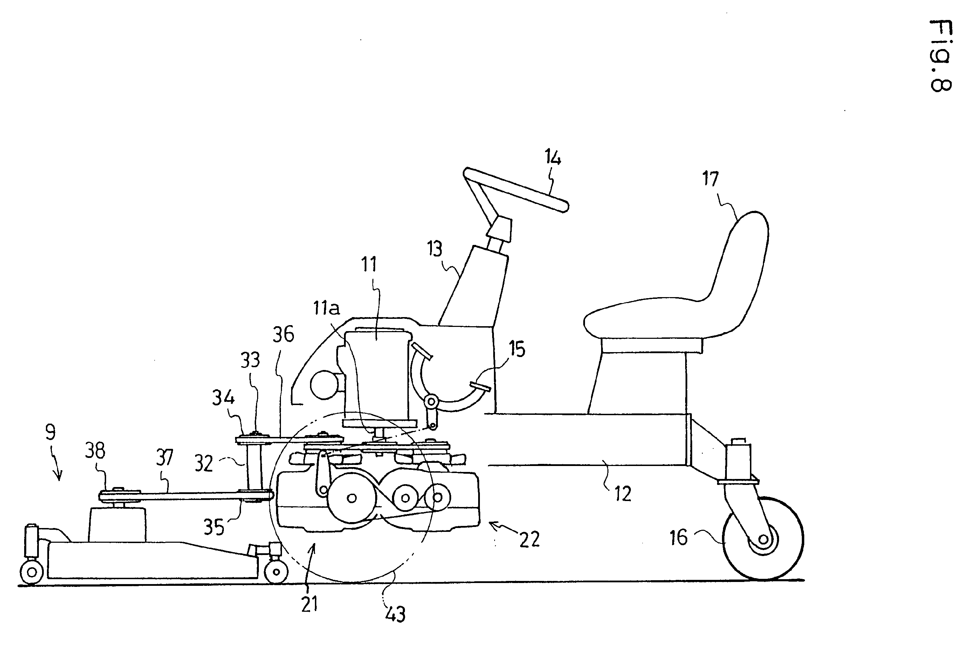

FIG. 8 shows an alternative arrangement of vehicle 1 in which mower unit 9 is disposed in front of the vehicle body. In this arrangement engine 11 is disposed in front of driver's deck, driving wheels 43 are located in the front of vehicle 1 and caster wheels 16 are at the rear of vehicle 1. Such a construction allows mower unit 9 to cut the grass before any wheels have pressed down the grass. Also, vehicle 1 can mow easily with respect to a place which the vehicle body cannot enter, for example, a place beneath branches of a tree, because forwardly projecting mower unit 9 can enter such a place.

Returning to FIGs. 2, 3 and 4, a pair of second differential output shafts (steering output shafts) 44L and 44R project respectively from both lateral sides of housing 24 of second driving unit 22. Sprockets 45L and 45R are fixed respectively onto second differential output shafts 44L and 44R. Sprocket 45L is diametrically smaller than sprocket 41L, and sprocket 45R is diametrically smaller than sprocket 41R.

At one of the lateral sides (at a left side in this embodiment) of housings 23 and 24, a chain 46 is interposed between sprockets 41 L and 45L, thereby constituting a first drive train. At the other side (right side in this embodiment), a sprocket 47 is disposed behind sprocket 45R and is rotatably supported onto a shaft 48 projecting laterally from vehicle chassis 12, and a chain 49 is interposed between sprockets 41R and 47, thereby constituting a second drive train.

Sprocket 45R engages at its lower end with chain 49. Accordingly, sprockets 41L and 45L or first and second differential shafts 40L and 44L of the first drive train are rotated in the same direction, and sprockets 41R and 45R or first and second differential shafts 40R and 44R of the second drive train and rotated in opposite directions. Thus, if second differential output shafts 44L and 44R rotates in the same rotational direction when both first differential output shafts 40L and 40R are neutral, sprockets 45L and 45R are rotated in the same rotational direction, so that first differential output shafts 40L and 40R are rotated in the opposite rotational directions. Gears, gears and shafts, belts and pulleys or the like may be used in place of the sprockets and chains for the purpose of constituting the first and second drive trains.

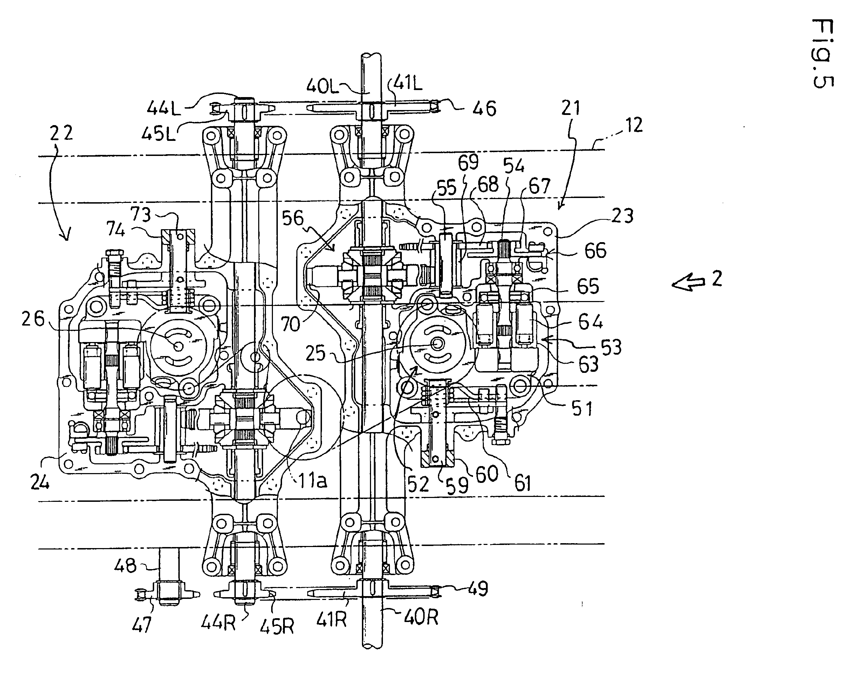

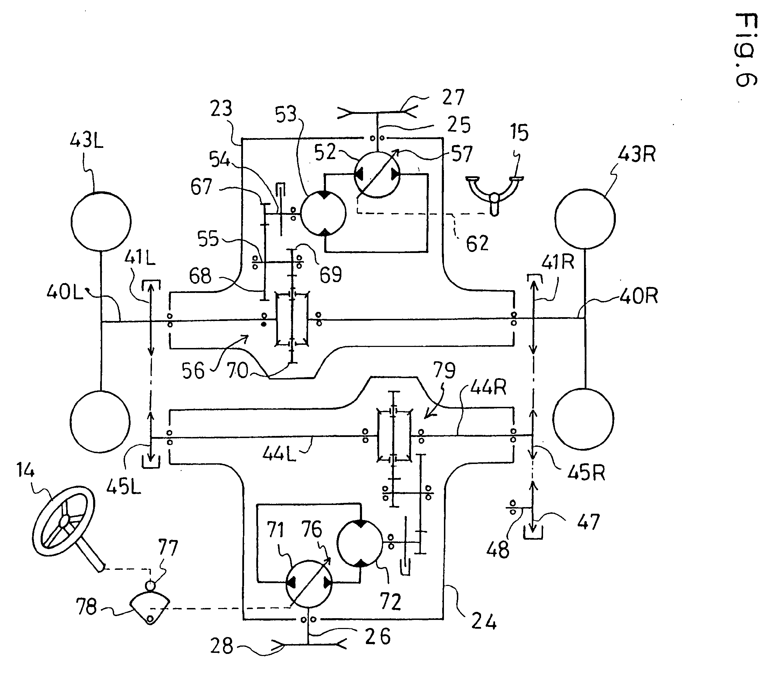

Next, explanation will be given on inner structures of first and second driving units 21 and 22, in accordance with FIGs. 5 and 6.

Housings 23 and 24 of first and second driving units 21 and 22 are similarly constructed. Each of housings 23 and 24 contains an HST, a differential gear unit, a drive train between the HST and the differential gear unit, and a pair of differential output shafts, all which comprise common components and are similarly structured.

At first, first driving unit 21 will be described. Housing 23, which consists of vertically divided halves separably joined with each other, contains a first HST, first differential output shafts 40L and 40R and a drive train drivingly connecting first HST with differential output shafts 40L and 40R. First HST comprises a L-like shaped center section 51 having a horizontal pump mounting surface and a vertical motor mounting surface, a hydraulic pump 52 mounted onto the horizontal pump mounting surface and a hydraulic motor 53 mounted onto the vertical motor mounting surface. Hydraulic motor 53 is disposed in front of hydraulic pump 52. Hydraulic pump 52 and hydraulic motor 53 are fluidly connected with each other through a closed fluid circuit formed within center section 51.

Housing 23 is constructed so that vertically divided halves are joined at their flat surrounding joint surfaces with each other along a horizontal joint plane. Bearing portions for a motor shaft 54 and a counter shaft 55 are provided on their joint surfaces, so that motor shaft 54 and counter shaft 55 are rotatably supported with their axes disposed on the horizontal joint plane. Bearing portions for rotatably supporting first differential output shafts 40L and 40R are eccentrically disposed above the horizontal joint plane. First differential output shafts 40L and 40R are differentially connected with each other through a differential gear unit 56 and respectively project at their utmost end portions laterally outwardly from the left and right outside ends of housing 23.

Hydraulic pump 52 is mounted on the horizontal pump mounting surface of center section 51. In this regard, an input shaft 25 as a pump shaft is vertically disposed along the axis of hydraulic pump 52. A cylinder block is anchored to input shaft 25 and is rotatably and slidably mounted on the horizontal pump mounting surface. A plurality of pistons are reciprocally movably inserted into the cylinder block through biasing springs. The heads of the pistons abut against a movable swash plate 57. Thus, by slanting operation of movable swash plate 57 as a output regulating member, the amount and direction of oil discharged from hydraulic pump 52 can be changed.

For the purpose of slanting operation of movable swash plate 57, a control shaft 59 is pivoted onto a side wall of housing 23 in parallel with first differential output shaft 40. A neutral spring 61 for biasing movable swash plate 57 to its neutral position is fitted around a portion of control shaft 59 within housing 23, so as to enable its neutral position to be adjusted. A control arm 60 is fixed onto a portion of control shaft 59 out of housing 23 and is connected to a speed changing operating tool like a lever or a pedal through a link 62 and the like.

In this embodiment, the speed changing operating tool is speed change pedal 15. Speed change pedal 15 is pivoted at its longitudinally middle portion so that vehicle 1 advances by treading the front half portion of speed change pedal 15 and reverses by treading the rear half portion thereof. The speed of advancing and reversing of the vehicle can be steplessly controlled in proportion to degree of rotation of speed change pedal 15 by treading thereof. Speed change pedal 15 is shown constructed like a seesaw, but may alternatively be divided into two pedals. Other constructions can also replace it for a speed changing tool.

Link 62 is compactly disposed substantially longitudinally below deck portion 12a. In a conventional driving apparatus also comprised a pair of driving units with each used for both speed changing and steering, the speed changing operating tool, such as a pedal, required complicated connections to output regulating members of both HSTs units through a complicated linkage, for example a pair of links. Speed change pedal 15 of driving apparatus 2 of the present invention, to the contrary, is connected to only single control arm 60 through only single link 62, because only movable swash plate 57 of first driving unit 21 is used as an output regulating member for speed changing. Thus, vehicle 1 can be constructed more compactly and at a reduced cost.

In such a construction, control arm 60 is rotated along the longitudinal direction of the vehicle by rotational operation of speed change pedal 15 and movable swash plate 57 is slanted by rotation of control shaft 59, so that the amount and direction of operating oil discharged from hydraulic pump 52.

The pressure oil from hydraulic pump 52 is charged into hydraulic motor 53 through oil passages bored within center section 51. Hydraulic motor 53 comprises a cylinder block 63 rotatably slidably mounted onto the vertical motor mounting surface of center section 51. A plurality of cylinder holes are bored in cylinder block 63 and a plurality of pistons 64 are reciprocally movably inserted into the cylinder holes through biasing springs, respectively. Pistons 64 abut at their head against a fixed swash plate 65. Motor shaft 54 is horizontally disposed along the rotational axis of cylinder block 63 and is not relatively rotatably anchored to cylinder block 63. Hydraulic motor 53 is just so constructed.

Motor shaft 54 is provided thereon with a brake unit 66. A gear 67 is fixed onto an end portion of motor shaft 54. Gear 67 engages with a large diametric gear 68 fixed onto counter shaft 55. A small diametric gear 69 also fixed onto counter shaft 55 engages with a ring gear 70 of differential gear unit 56. Differential gear unit 56 is driven in state that ring gear 70 is rotated at reduced speed by the power transmitted from motor shaft 54, thereby driving left and right first differential output shafts 40L and 40R.

Second driving unit 22, which is disposed in a longitudinally opposite direction as first driving unit 21, similarly comprises housing 24 and a second HST including a hydraulic pump 71 and a hydraulic motor 72 contained in housing 24. A control shaft 73 for rotating a movable swash plate 76 of hydraulic pump 71 projects leftwardly from housing 24. A control arm 74 is fixed onto a portion of control shaft 73 out of housing 24 and is connected to steering wheel 14 through a link 75 and the like. Link 75 is compactly disposed substantially longitudinally below deck portion 12a. As shown in FIG. 6, a pinion 77 is fixed onto a basic portion of a stem of steering wheel 14 and engages with a fan-shaped gear 78. Gear 78 is connected with link 75. Thus, by rotational operation of steeringwheel 14, gear 78 engages with pinion 77 and is rotated at reduced speed, so as to rotate movable swash plate 76 through link 75. Steering wheel 14 is rotatable from a straight traveling position in two opposite directions to the limits determined by gear 78.

Similar to the simplified construction described above for link 62 interposed between speed change pedal 15 and control arm 60, steering wheel 14 as a steering operating tool is simply connected to only single control arm 74 through single link 75 because only movable swash plate 76 of second driving unit 22 is used as an output regulating member for steering. As opposed to the complex linkages required for a steering and speed changing in a conventional system wherein each is connected to two laterally disposed HSTs which independently drive left and right axles, the linkages for steering and for speed change in accordance with the present invention are simplified, compact, and reduced in cost, thereby contributing to providing a compact vehicle at low cost.

Next, explanation will be given on controlling operation of a vehicle provided with driving apparatus 2 of the present invention so constructed as the above mentioned. When engine 11 is driven, input shafts 25 and 26 are always driven. For the purpose of straight advancing or reversing, steering wheel 14 is set in state of straight moving, so that second driving unit 22 is neutral. In this condition, movable swash plate 57 of first driving unit 21 is rotated by forward or rearward tread of speed change pedal 15. Thus, first differential output shafts 40L and 40R are driven at even speed, so that the vehicle advances or reverses.

When steering wheel 14 is rotated for right turning in state that the vehicle is advancing or reversing, movable swash plate 76 of second driving unit 22 is rotated so that hydraulic motor 72 is driven, thereby driving second differential output shafts 44L and 44R, so as to transmit an accelerating power to left first differential output shaft 40L, and second differential output shaft 44R is rotated oppositely to first differential output shaft 40R through sprockets 45R, 47 and 41R, thereby transmitting a decelerating power to right first differential output shaft 40R, so that vehicle 1 turns right. If steering wheel 14 is rotated so as to rotate hydraulic motor 72 in reverse direction, left differential output shaft 44L transmits a decelerating force to left differential output shaft 40L and right differential output shaft 44R transmits an accelerating force to right differential output shaft 40R, whereby vehicle 1 turns left.

When speed change pedal 15 is not trod, hydraulic pump 51 offirst driving unit 21 is neutral. Then, if steering wheel 14 is rotated, movable swash plate 76 of second driving unit 22 is rotated so as to drive hydraulic motor 72. When second differential output shafts 44L and 44R are rotated in regular direction, left first differential output shaft 40L is rotated in advancing direction and right first differential output shaft 40R is rotated in reverse direction, so that vehicle 1 spins rightwardly. If steering wheel 14 is rotated so as to rotate second differential output shafts 44L and 44R in reverse direction, vehicle 1 spins leftwardly.

Driving apparatus 2 uses a pair of common structured driving units 21 and 22, each ofwhich comprises anHST, a differential gear unit, a drive train between the HST and the differential gear unit and a pair of differential output shafts, one for speed changing in advancing and reversing and the other for steering, so that a common driving unit of the generally conventional structure can be used for the two different purposes, thereby reducing cost.

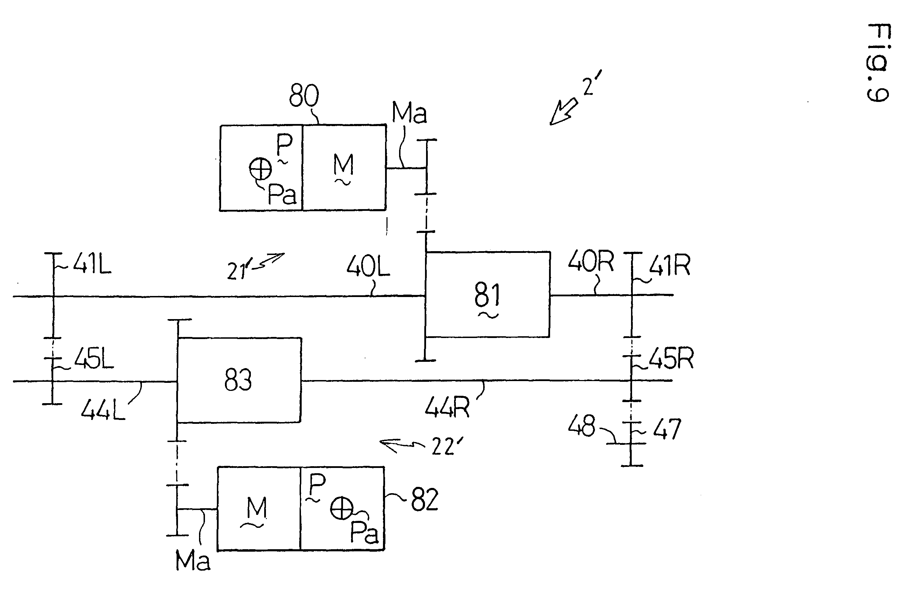

In another embodiment of the present invention, as shown in FIG. 9, driving apparatus 2' comprises a pair of a first driving system 21' for speed changing in advancing and reversing and a second driving system 22' for steering. Driving system 21' is constructed so that a first HST unit 80 and a first differential gear unit 81, which is separated from first HST unit 80 (that is, not contained within a housing of first HST unit 80), are drivingly connected with each other by a drive train such as a gear train, a chain and sprockets, belt and pulleys or the like. Second driving system 22' comprising a second HST unit 82 and a second differential gear unit 83 is similarly constructed, so that second differential gear unit 83 is separated from second HST unit 82.

Each of first and second HST units 80 and 82 comprises a housing and a hydraulic pump P and a hydraulic motor M, both of which are fluidly connected with each other, contained in the housing and disposed so that an input shaft Pa as a pump shaft of hydraulic pump P is vertically axially oriented and an output shaft Ma as a motor shaft of hydraulic motor M is horizontally laterally axially oriented. Each of first and second differential gear units 81 and 83 is disposed so that its respective input member (not shown), such as a gear, a sprocket, a pulley or the like is horizontally laterally axially disposed. Thus, each of the driving trains such as a gear train, a chain, a belt or the like is interposed longitudinally, vertically or longitudinally slantingly between output member Ma and the input member.

Each of differential gear units 81 and 83 is provided with left and right differential output shafts. Left and right first differential output shafts 40L and 40R as axles project laterally from both lateral sides of first differential gear unit 81. Left and right second differential output shafts 44L and 44R as driving shafts for steering project laterally from both lateral sides of second differential gear unit 83. The drive trains between left first and left second differential output shafts 40L and 44L and between right first and right second differential output shafts 44L and 44R are structured similarly with those of the above mentioned driving apparatus 2. In this regard, the left drive train between left differential output shafts 40L and 44L comprises chain 46 and sprockets 41L and 45L and the right drive train between right differential output shafts 40R and 44R comprises chain 49 and sprockets 41R, 45R and 47, so that left and right drive trains are so constructed as to be rotated in opposite directions to each other. Each of the drive trains may be replaced by a gear train, a belt and pulleys or the like.

In such an alternative embodiment, there are an HST unit and a differential gear unit independent to each other, which are widely produced. Each of the HST unit and the differential gear unit can be obtained at low cost because of its simple structure. Thus, driving apparatus 2' can be constructed at low cost by assembly of generally available HST units and differential gear units.

The previously described structures of driving apparatus 2 such as the linkage connecting movable swash plates of first and second HST units 80 and 82 respectively to speed change pedal 15 and steering wheel 14, the transmitting mechanism from output pulley 20 of engine 11 to input pulleys 25 and 26 of first and second HSTs through single belt 30, the attachment of mower unit 19 and other constructions can be similarly applied to driving apparatus 2'.

## Claims

1. A vehicle (1) comprising:
a driving apparatus (2) for speed changing and steering of a vehicle, including a first driving unit (21) for driving a pair of driving wheels (43) forwardly and backwardly at various speeds and a second driving unit (22) for generating a difference of rotary speed between said pair of driving wheels (43) so as to steer said vehicle (1), said first and second driving units (21,22) being attached to a vehicle chassis (12),
wherein said first driving unit (21) is provided with a pair of differentially connected first and second axles (40L,40R) onto which said respective driving wheels (43) are attached, a first transmission and driving output setting means (57,59,60), so that said first and second axles (40L,40R) are driven according to the direction and speed of output rotation of said first transmission determined by said driving output setting means (57,59,60), and
wherein said second driving unit (22) is provided with a pair of differentially connected first and second steering output shafts (44L,44R), a second hydrostatic transmission and steering output setting means (73,74,76), so that said first and second steering output shafts (44L,44R) are driven according to the direction and speed of output rotation of said second transmission determined by said steering output setting means (73,74,76),
wherein a common prime mover (11) is mounted on said vehicle chassis (12) so as to be drivingly connected to said first and second transmissions,
wherein a first drive train interlocks said first axle (40L) and said first steering output shaft (44L) with each other so as to rotate said first axle (40L) and said first steering output shaft (44L) in the same direction,
wherein a second drive train interlocks said second axle (40R) and said second steering output shaft (44R) with each other so as to rotate said second axle (40R) and said second steering output shaft (44R) in opposite directions, and
**characterized in that**
said first transmission is a hydrostatic transmission,
said driving wheels (43) are disposed at one of a front and rear of said vehicle (1), and
at least one caster wheel (16) is disposed at the other of front and rear of said vehicle (1).

2. The vehicle (1) as set forth in claim 1, wherein an output shaft (11a) of sald prime mover (11) is disposed between an input shaft (25) of said first hydrostatic transmission and an input shaft (26) of said second hydrostatic transmission.

3. The vehicle (1) as set forth in claim 2, wherein pulleys (28,31) are fixed onto said input shafts (25,26) of said first and second hydrostatic transmissions and said output shaft (11a) of said prime mover (11), respectively, and wherein all said pulleys (28,31) are bound with a belt (30) for power transmission.

4. The vehicle (1) as set forth in claim 1, wherein said first and second axles (40L,40R) of said first driving unit (21) are extended perpendicularly to the traveling direction of said vehicle (1) so as to be opposite to each other, and said first and second steering output shafts (44L,44R) are extended in parallel to said first and second axles (40L, 40R) .

5. The vehicle (1) as set forth in claim 4, wherein said first and second driving units (21,22) are aligned along the traveling direction of said vehicle (1).

6. The vehicle (1) as set forth in claim 1, wherein said driving output setting means (57,59,60) interlocks with a speed control operating member (15) provided on a driver's portion of said vehicle (1).

7. The vehicle (1) as set forth in claim 6, wherein a linkage (62) interposed between said driving output setting means (57,59,60) and said speed control operating member (15) is disposed below said driver's portion of said vehicle (1).

8. The vehicle (1) as set forth in claim 6 or 7, wherein said driving output setting means (57,59,60) comprises a lever (60) rotated along the traveling direction of said vehicle (1) according to the operation of said speed control operating member (15).

9. The vehicle (1) as set forth in claim 6, 7 or 8, wherein said speed control operating member is a foot pedal (15).

10. The vehicle (1) as set forth in claim 9, wherein said foot pedal (15) comprises a forward driving pedal and a backward traveling pedal, and wherein a direction of output rotation of said first hydrostatic transmission is determined according to which is pressed, said forward driving pedal or said backward driving pedal.

11. The vehicle (1) as set forth in claim 1, wherein said first driving unit (21) comprises a differential mechanism differentially connecting said first and second axles (40L,40R), so that the output of said first hydrostatic transmission is transmitted to said first and second axles (40L,40R) through said differential mechanism.

12. The vehicle (1) as set forth in claim 11, wherein.said first driving unit (21) comprises a common housing (23) containing said first hydrostatic transmission and said differential mechanism together.

13. The vehicle (1) as set forth in claim 11, wherein said first driving unit (21) comprises a housing containing said first hydrostatic transmission (80), and said differential mechanism (81) is disposed outside said housing.

14. The vehicle (1) as set forth in claim 1, wherein said steering output setting means (73,74,76) interlocks with a steering operating member (14) provided on a driver's portion of said vehicle (1).

15. The vehicle (1) as set forth in claim 14, wherein a linkage (75) interposed between said steering output setting means (73,74,76) and said steering operating member (14) is disposed below said driver's portion of said vehicle (1).

16. The vehicle (1) as set forth in claim 14 or 15, wherein said steering output setting means (73,74,76) comprises a lever (74) rotated along the traveling direction of said vehicle (1) according to the operation of said steering operating member (14).

17. The vehicle (1) as set forth in claim 14, 15 or 16, wherein said steering operating member is a steering wheel (14).

18. The vehicle (1) as set forth in claim 17, wherein said steering wheel (14) is rotatable from a straight traveling position in two opposite directions for left-turning and right-turning of said vehicle (1), and wherein a direction of output rotation of said second hydrostatic transmission is determined according to which direction said steering wheel (14) is rotated from said straight traveling position.

19. The vehicle (1) as set forth in claim 1, wherein said second driving unit (22) comprises a differential mechanism differentially connecting said first and second steering output shafts (44L,44R) so that-the output of said second hydrostatic transmission is transmitted to said first and second steering output shafts (44L, 44R) through said differential mechanism.

20. The vehicle (1) as set forth in claim 19, wherein said second driving unit (22) comprises a common housing (24) containing said second hydrostatic transmission and said differential mechanism together.

21. The vehicle (1) as set forth in claim 19, wherein said second driving unit (22) comprises a housing containing said second hydrostatic transmission (82), and said differential mechanism (83) is disposed outside said housing.

22. The vehicle (1) as set forth in claim 1, wherein said first driving unit (21) comprises a first differential mechanism differentially connecting said first and second axles (40L,40R) so that the output of said first hydrostatic transmission is transmitted to said first and second axles (40L,40R) through said first differential mechanism, and wherein said second driving unit (22) comprises a second differential mechanism differentially connecting said first and second steering output shafts (44L,44R) so that the output of said second hydrostatic transmission is transmitted to said first and second steering output shafts (44L,44R) through said second differential mechanism.

23. The vehicle (1) as set forth in claim 22, wherein said first driving unit (21) comprises a first housing (23) containing at least said first hydrostatic transmission, and wherein said second driving unit (22) comprises a second housing (24) containing at least said second hydrostatic transmission.

24. The vehicle (1) as set forth in claim 23, wherein said first housing (23) contains said first differential mechanism and said second housing (24) contains said second differential mechanism.

25. The vehicle (1) as set forth in claim 23, wherein said first differential mechanism (81) is disposed outside said first housing, and said second differential mechanism (83) is dispsoed outside said second housing.

26. The vehicle (1) as set forth in claim 23, wherein said first and second driving units (21,22) are aligned along the traveling direction of said vehicle (1), wherein said first and second axles (40L,40R) supported by said first housing (23) are extended perpendicularly to the traveling direction of said vehicle (1) in opposite to each other, and wherein said first and second steering output shafts (44L,44R) supported by said second housing (24) are extended in parallel to said first and second axles (40L,40R) so that said first axle (40L) and said first steering output shaft (44L) are disposed on one side of said first and second housings (23,24) and said second axle (40R) and said second steering output shaft (44R) are disposed on the other side of said first and second housings (23,24).

27. The vehicle (1) as set forth in any one of claims 1 to 26, wherein said vehicle (1) is provided with a mower unit (9).

28. The vehicle (1) as set forth in any one of claims 1 to 27, wherein each of said first and second hydrostatic transmissions comprises a hydraulic pump (52,71) and a hydraulic motor (53,72) fluidly connected with each other.

29. The vehicle (1) as set forth in claim 28, wherein said driving output setting means comprises a movable swash plate (57) of said hydraulic pump (52) or motor (53) of said first hydrostatic transmission.

30. The vehicle (1) as set forth in claim 28 or 29, wherein said steering output setting means comprises a movable swash plate (76) of said hydraulic pump (71) or motor (72) of said second hydrostatic transmission.

31. The vehicle (1) as set forth in any one of claims 1 to 30, wherein said first and second driving units (21,22) are of similar structure.

## Patentansprüche

1. Fahrzeug (1), mit:
einer Antriebsvorrichtung (2) zur Geschwindigkeitsänderung und zum Lenken eines Fahrzeugs, mit einer ersten Antriebseinheit (21) zum Antreiben eines Paars Antriebsräder (43) vorwärts und rückwärts mit verschiedenen Geschwindigkeiten, und einer zweiten Antriebseinheit (22) zum Erzeugen einer Drehgeschwindigkeitsdifferenz zwischen dem Paar Antriebsräder (43), um das Fahrzeug (1) zu lenken, wobei die ersten und zweiten Antriebseinheiten (21,22) an einem Fahrzeugchassis (12) angebracht sind,
wobei die erste Antriebseinheit (21) mit einem Paar differential verbundener erster und zweiter Wellen (40L,40R) versehen ist, an denen die jeweiligen Antriebsräder (43) angebracht sind, einem ersten Getriebe- und Antriebsleistungs-Einstellmittel (57,59,60), so dass die ersten und zweiten Wellen (40L,40R) gemäß der Richtung und Geschwindigkeit der Ausgangsdrehung des ersten Getriebes, die durch das Antriebsleistungs-Einstellmittel (57,59,60) bestimmt werden, angetrieben werden, und
wobei die zweite Antriebseinheit (22) mit einem Paar differential verbundener erster und zweiter Lenkausgangswellen (44L,44R), einem zweiten hydrostatischen Getriebe und einem Lenkleistungs-Einstellmittel (73,74,76) versehen ist, so dass die ersten und zweiten Lenkausgangswellen (44L,44R) gemäß der Richtung und Geschwindigkeit der Ausgangsdrehung des zweiten Getriebes, die durch das Lenkleistungs-Einstellmittel (73,74,76) bestimmt werden, angetrieben werden,
wobei eine gemeinsame Antriebsmaschine (11) an dem Fahrzeugchassis (12) so angebracht ist, dass sie antriebsmäßig mit den ersten und zweiten Getrieben verbunden ist,
wobei ein erster Antriebsgetriebezug die erste Welle (40L) und die erste Lenkausgangswelle (44L) miteinander verriegelt, so dass die erste Welle (40L) und die erste Lenkausgangswelle (44L) in der gleichen Richtung gedreht werden,
wobei ein zweiter Antriebsgetriebezug die zweite Welle (40R) und die zweite Lenkausgangswelle (44R) miteinander so verriegelt, dass die zweite Welle (40R) und die zweite Lenkausgangswelle (44R) in entgegengesetzten Richtungen gedreht werden, und
**dadurch gekennzeichnet, dass**
das erste Getriebe ein hydrostatisches Getriebe ist,
die Antriebsräder (43) entweder vorne oder hinten am Fahrzeug (1) angeordnet sind, und
mindestens eine Kastorrad (16) jeweils entgegengesetzt, also entweder hinten oder vorne am Fahrzeug (1) angeordnet ist.

2. Fahrzeug (1) nach Anspruch 1, wobei eine Ausgangswelle (11a) der Antriebsmaschine (11) zwischen einer Eingangswelle (25) des ersten hydrostatischen Getriebes und einer Eingangswelle (26) des zweiten hydrostatischen Getriebes angeordnet ist.

3. Fahrzeug (1) nach Anspruch 2, wobei Riemenscheiben (28,31) auf den Eingangswellen (25,26) der ersten und zweiten hydrostatischen Getriebe bzw. auf der Ausgangswelle (11a) der Antriebsmaschine (11) befestigt sind, und wobei alle Riemenscheiben (28,31) mit einem Riemen (30) zur Kraftübertragung gekoppelt sind.

4. Fahrzeug (1) nach Anspruch 1, wobei die ersten und zweiten Wellen (40L,40R) der ersten Antriebseinheit (21) sich senkrecht zu der Fahrrichtung des Fahrzeugs (1) erstrecken, so dass sie einander gegenüberliegen, und die ersten und zweiten Lenkausgangswellen (44L,44R) sich parallel zu den ersten und zweiten Wellen (40L,40R) erstrecken.

5. Fahrzeug (1) nach Anspruch 4, wobei die ersten und zweiten Antriebseinheiten (21,22) entlang der Fahrrichtung des Fahrzeugs (1) ausgerichtet sind.

6. Fahrzeug (1) nach Anspruch 1, wobei das Antriebsleistungs-Einstellmittel (57,59,60) mit einem Geschwindigkeitssteuerungs-Betätigungselement (15), das an einem Fahrerabschnitt des Fahrzeugs (1) vorgesehen ist, verriegelt ist.

7. Fahrzeug (1) nach Anspruch 6, wobei ein Verbindungsgestänge (62) zwischen dem Antriebsleistungs-Einstellmittel (57,59,60) und dem Geschwindigkeitssteuerungs-Betätigungselement (15) unter dem Fahrerabschnitt des Fahrzeugs (1) angeordnet ist.

8. Fahrzeug (1) nach Anspruch 6 oder 7, wobei das Antriebsleistungs-Einstellmittel (57,59,60) einen Hebel (60) umfasst, der sich entlang der Fahrrichtung des Fahrzeugs (1) entsprechend der Betätigung des Geschwindigkeitssteuerungs-Betätigungselements (15) dreht.

9. Fahrzeug (1) nach Anspruch 6, 7 oder 8, wobei das Geschwindigkeitssteuerungs-Betätigungselement ein Fußpedal (15) ist.

10. Fahrzeug (1) nach Anspruch 9, wobei das Fußpedal (15) ein Vorwärtsfahrpedal und ein Rückwärtsfahrpedal umfasst, und
wobei eine Richtung der Ausgangsdrehung des ersten hydrostatischen Getriebes jeweils entsprechend dem Niederdrücken des Vorwärtsfahrpedals oder des Rückwärtsantriebspedals bestimmt wird.

11. Fahrzeug (1) nach Anspruch 1, wobei die erste Antriebseinheit (21) einen Differentialmechanismus umfasst, der die ersten und zweiten Wellen (40L,40R) differential verbindet, so dass die Ausgangsleistung des ersten hydrostatischen Getriebes über den Differentialmechanismus auf die ersten und zweiten Wellen (40L,40R) übertragen wird.

12. Fahrzeug (1) nach Anspruch 11, wobei die erste Antriebseinheit (21) ein gemeinsames Gehäuse (23) aufweist, das das erste hydrostatische Getriebe und den Differentialmechanismus gemeinsam enthält.

13. Fahrzeug (1) nach Anspruch 11, wobei die erste Antriebseinheit (21) ein Gehäuse aufweist, das das erste hydrostatische Getriebe (80) enthält, und der Differentialmechanismus (81) außerhalb des Gehäuses angeordnet ist.

14. Fahrzeug (1) nach Anspruch 1, wobei das Lenkleistungs-Einstellmittel (73,74,76) mit einem Lenkbetätigungselement (14) verriegelt ist, das an einem Fahrerabschnitt des Fahrzeugs (1) vorgesehen ist.

15. Fahrzeug (1) nach Anspruch 14, wobei ein zwischen das Lenkleistungs-Einstellmittel (73,74,76) und das Lenkbetätigungselement (14) eingefügtes Verbindungsgestänge (75) unter dem Fahrerabschnitt des Fahrzeugs (1) angeordnet ist.

16. Fahrzeug (1) nach Anspruch 14 oder 15, wobei das Lenkleistungs-Einstellmittel (73,74,76) einen Hebel (74) umfasst, der entlang der Fahrrichtung des Fahrzeugs (1) entsprechend der Betätigung des Lenkbetätigungselements (14) gedreht wird.

17. Fahrzeug (1) nach Anspruch 14, 15 oder 16, wobei das Lenkbetätigungselement ein Lenkrad (14) ist.

18. Fahrzeug (1) nach Anspruch 17, wobei das Lenkrad (14) von einer Geradeausfahrposition in zwei entgegengesetzte Richtungen zur Linkswende und zur Rechtswende des Fahrzeugs (1) drehbar ist, und wobei eine Richtung der Ausgangsdrehung des zweiten hydrostatischen Getriebes entsprechend der Richtung bestimmt wird, in der das Lenkrad (14) von der Geradeausfahrposition aus gedreht wird.

19. Fahrzeug (1) nach Anspruch 1, wobei die zweite Antriebseinheit (22) einen Differentialmechanismus umfasst, der die ersten und zweiten Lenkausgangswellen (44L,44R) differential so verbindet, dass die Ausgangsleistung des zweiten hydrostatischen Getriebes auf die ersten und zweiten Lenkausgangswellen (44L,44R) über den Differentialmechanismus übertragen wird.

20. Fahrzeug (1) nach Anspruch 19, wobei die zweite Antriebseinheit (22) ein gemeinsames Gehäuse (24) aufweist, welches das zweite hydrostatische Getriebe und den Differentialmechanismus gemeinsam enthält.

21. Fahrzeug (1) nach Anspruch 19, wobei die zweite Antriebseinheit (22) ein Gehäuse aufweist, welches das zweite hydrostatische Getriebe (82) enthält, und der Differentialmechanismus (83) außerhalb des Gehäuses angeordnet ist.

22. Fahrzeug (1) nach Anspruch 1, wobei die erste Antriebseinheit (21) einen ersten Differentialmechanismus aufweist, welcher die ersten und zweiten Wellen (40L,40R) differential so verbindet, dass die Ausgangsleistung des ersten hydrostatischen Getriebes auf die ersten und zweiten Wellen (40L,40R) über den ersten Differentialmechanismus übertragen wird, und wobei die zweite Antriebseinheit (22) einen zweiten Differentialmechanismus umfasst, der die ersten und zweiten Lenkausgangswellen (44L,44R) so miteinander verbindet, dass die Ausgangsleistung des zweiten hydrostatischen Getriebes auf die ersten und zweiten Lenkausgangswellen (44L,44R) über den zweiten Differentialmechanismus übertragen wird.

23. Fahrzeug (1) nach Anspruch 22, wobei die erste Antriebseinheit (21) ein erstes Gehäuse (23) umfasst, das mindestens das erste hydrostatische Getriebe enthält, und wobei die zweite Antriebseinheit (22) ein zweites Gehäuse (24) umfasst, das mindestens das zweite hydrostatische Getriebe enthält.

24. Fahrzeug (1) nach Anspruch 23, wobei das erste Gehäuse (23) den ersten Differentialmechanismus und das zweite Gehäuse (24) den zweiten Differentialmechanismus enthält.

25. Fahrzeug (1) nach Anspruch 23, wobei der erste Differentialmechanismus (81) außerhalb des ersten Gehäuses angeordnet ist und der zweite Differentialmechanismus (83) außerhalb des zweiten Gehäuses angeordnet ist.

26. Fahrzeug (1) nach Anspruch 23, wobei die ersten und zweiten Antriebseinheiten (21,22) entlang der Fahrrichtung des Fahrzeugs (1) ausgerichtet sind, wobei die ersten und zweiten Wellen (40L,40R), die von dem ersten Gehäuse (23) gehaltert werden, sich senkrecht zu der Fahrrichtung des Fahrzeugs (1) in zueinander entgegengesetzten Richtungen erstrecken, und wobei die ersten und zweiten Lenkausgangswellen (44L,44R) die von dem zweiten Gehäuse (24) gelagert werden, sich parallel zu den ersten und zweiten Wellen (40L,40R) so erstrecken, dass die erste Welle (40L) und die erste Lenkausgangswelle (44L) auf einer Seite der ersten und zweiten Gehäuse (23,24) angeordnet sind, und die zweite Welle (40R) und die zweite Lenkausgangswelle (44R) auf der anderen Seite der ersten und zweiten Gehäuse (23,24) angeordnet ist/sind.

27. Fahrzeug (1) nach einem der Ansprüche 1 bis 26, wobei das Fahrzeug (1) mit einer Mäheinheit (9) versehen ist.

28. Fahrzeug (1) nach einem der Ansprüche 1 bis 27, wobei jedes der ersten und zweiten hydrostatischen Getriebe eine Hydraulikpumpe (52,71) und einen Hydraulikmotor (53,72) umfasst, die in Fluidverbindung miteinander stehen.

29. Fahrzeug (1) nach Anspruch 28, wobei das Antriebsleistungs-Einstellmittel eine bewegliche Taumelscheibe (57) der hydraulischen Pumpe (52) oder des Motors (53) des ersten hydrostatischen Getriebes aufweist.

30. Fahrzeug (1) nach Anspruch 28 oder 29, wobei das Lenkleistungs-Einstellmittel eine bewegliche Taumelscheibe (76) der Hydraulikpumpe (71) oder des Motors (72) des zweiten hydrostatischen Getriebes umfasst.

31. Fahrzeug (1) nach einem der Ansprüche 1 bis 30, wobei die ersten und zweiten Antriebseinheiten (21,22) einen ähnlichen Aufbau aufweisen.

## Revendications

1. Véhicule (1) comprenant :
un dispositif d'entraînement (2) pour changer les vitesses et diriger un véhicule, incluant une première unité d'entraînement (21) pour entraîner une paire de roues motrices (43) vers l'avant et l'arrière, à diverses vitesses, et une seconde unité d'entraînement (22) pour générer une différence de vitesse de rotation entre ladite paire de roues motrices (43) de manière à diriger ledit véhicule (1), lesdites première et seconde unités d'entraînement (21, 22) étant assujetties à un châssis de véhicule (12),
dans lequel ladite première unité d'entraînement (21) est pourvue d'une paire de premier et second essieux raccordés par différentiel (40L, 40R) sur laquelle lesdites roues motrices respectives (43) sont fixées, d'une première transmission et de moyens de fixation de puissance d'entraînement (57, 59, 60), de telle sorte que lesdits premier et second essieux (40L, 40R) sont entraînés en fonction du sens et de la vitesse de rotation de sortie de ladite première transmission déterminés par lesdits moyens de fixation de puissance d'entraînement (57, 59, 60), et
dans lequel ladite seconde unité d'entraînement (22) est pourvue d'une paire de premier et second arbres de sortie de direction raccordés par différentiel (44L, 44R), d'une seconde transmission hydrostatique et de moyens de fixation de puissance de direction (73, 74, 76), de telle sorte que lesdits premier et second arbres de sortie de direction (44L, 44R) sont entraînés en fonction du sens et de la vitesse de rotation de sortie de ladite seconde transmission déterminés par lesdits moyens de fixation de puissance de direction (73, 74, 76),
dans lequel un moteur primaire commun (11) est monté sur ledit châssis de véhicule (12) de manière à être raccordé, en entraînement, auxdites première et seconde transmissions,
dans lequel un premier train d'entraînement verrouille mutuellement ledit premier essieu (40L) et ledit premier arbre de sortie de direction (44L) de manière à faire tourner ledit premier essieu (40L) et ledit premier arbre de sortie de direction (44L) dans le même sens,
dans lequel un second train d'entraînement verrouille mutuellement ledit second essieu (40R) et ledit second arbre de sortie de direction (44R) de manière à faire tourner ledit second essieu (40R) et ledit second arbre de sortie de direction (44R) dans des sens opposés, et
**caractérisé en ce que**
ladite première transmission est une transmission hydrostatique,
lesdites roues motrices (43) sont disposées à l'un de l'avant et de l'arrière dudit véhicule (1), et
au moins une roue de chasse (16) est disposée à l'autre de l'avant et de l'arrière dudit véhicule (1).

2. Véhicule (1) selon la revendication 1, dans lequel un arbre de sortie (11a) dudit moteur primaire (11) est disposé entre un arbre d'entrée (25) de ladite première transmission hydrostatique et un arbre d'entrée (26) de ladite seconde transmission hydrostatique.

3. Véhicule (1) selon la revendication 2, dans lequel des poulies (28, 31) sont fixées sur lesdits arbres d'entrée (25, 26) desdites première et seconde transmissions hydrostatiques et ledit arbre de sortie (11a) dudit moteur primaire (11), respectivement, et dans lequel toutes lesdites poulies (28, 31) sont reliées par une courroie (30) pour une transmission de puissance.

4. Véhicule (1) selon la revendication 1, dans lequel lesdits premier et second essieux (40L, 40R) de ladite première unité d'entraînement (21) sont étendus perpendiculairement à la direction d'avancement dudit véhicule (1) de manière à s'opposer l'un l'autre, et lesdits premier et second arbres de sortie de direction (44L, 44R) sont étendus parallèlement auxdits premier et second essieux (40L, 40R).

5. Véhicule (1) selon la revendication 4, dans lequel lesdites première et seconde unités d'entraînement (21, 22) sont alignées le long de la direction d'avancement dudit véhicule (1).

6. Véhicule (1) selon la revendication 1, dans lequel lesdits moyens de fixation de puissance d'entraînement (57, 59, 60) se verrouillent mutuellement avec un élément d'actionnement de commande de vitesse (15) disposé sur une partie d'un conducteur dudit véhicule (1).

7. Véhicule (1) selon la revendication 6, dans lequel une tringlerie (62) interposée entre lesdits moyens de fixation de puissance d'entraînement (57, 59, 60) et ledit élément d'actionnement de commande de vitesse (15) est disposée au-dessous de ladite partie d'un conducteur dudit véhicule (1).

8. Véhicule (1) selon la revendication 6 ou 7, dans lequel lesdits moyens de fixation de puissance d'entraînement (57, 59, 60) comprennent un levier (60) tournant le long de la direction d'avancement dudit véhicule (1) en fonction de l'action dudit élément d'actionnement de commande de vitesse (15).

9. Véhicule (1) selon la revendication 6, 7 ou 8, dans lequel ledit élément d'actionnement de commande de vitesse est une pédale (15).

10. Véhicule (1) selon la revendication 9, dans lequel ladite pédale (15) comprend une pédale d'entraînement vers l'avant et une pédale d'avancement vers l'arrière, et dans lequel un sens de rotation de sortie de ladite première transmission hydrostatique est déterminé en fonction de celle qui est abaissée, de ladite pédale d'entraînement vers l'avant ou de ladite d'avancement vers l'arrière.

11. Véhicule (1) selon la revendication 1, dans lequel ladite première unité d'entraînement (21) comprend un mécanisme différentiel raccordant par différentiel lesdits premier et second essieux (40L, 40R), de telle sorte que la puissance de ladite première transmission hydrostatique est transmise auxdits premier et second essieux (40L, 40R) par l'intermédiaire dudit mécanisme différentiel.

12. Véhicule (1) selon la revendication 11, dans lequel ladite première unité d'entraînement (21) comprend un logement commun (23) contenant conjointement ladite première transmission hydrostatique et ledit mécanisme différentiel.

13. Véhicule (1) selon la revendication 11, dans lequel ladite première unité d'entraînement (21) comprend un logement contenant ladite première transmission hydrostatique (80), et ledit mécanisme différentiel (81) est disposé à l'extérieur dudit logement.

14. Véhicule (1) selon la revendication 1, dans lequel lesdits moyens de fixation de puissance de direction (73, 74, 76) se verrouillent mutuellement avec un élément d'actionnement de direction (14) disposé sur une partie d'un conducteur dudit véhicule (1).

15. Véhicule (1) selon la revendication 14, dans lequel une tringlerie (75) interposée entre lesdits moyens de fixation de puissance de direction (73, 74, 76) et ledit élément d'actionnement de direction (14) est disposée au-dessous de ladite partie d'un conducteur dudit véhicule (1).

16. Véhicule (1) selon la revendication 14 ou 15, dans lequel lesdits moyens de fixation de puissance de direction (73, 74, 76) comprennent un levier (74) tournant le long de la direction d'avancement dudit véhicule (1) en fonction de l'action dudit élément d'actionnement de direction (14).

17. Véhicule (1) selon la revendication 14, 15 ou 16, dans lequel ledit élément d'actionnement de direction est un volant de direction (14).

18. Véhicule (1) selon la revendication 17, dans lequel ledit volant de direction (14) peut tourner par rapport à une position d'avancement rectiligne selon deux sens opposés pour faire tourner à gauche et faire tourner à droite ledit véhicule (1), et dans lequel un sens de rotation de sortie de ladite seconde transmission hydrostatique est déterminé en fonction du sens de rotation dudit volant de direction (14) par rapport à ladite position d'avancement rectiligne.

19. Véhicule (1) selon la revendication 1, dans lequel ladite seconde unité d'entraînement (22) comprend un mécanisme différentiel raccordant par différentiel lesdits premier et second arbres de sortie de direction (44L, 44R), de telle sorte que la puissance de ladite seconde transmission hydrostatique est transmise auxdits premier et second arbres de sortie de direction (44L, 44R) par l'intermédiaire dudit mécanisme différentiel.

20. Véhicule (1) selon la revendication 19, dans lequel ladite seconde unité d'entraînement (22) comprend un logement commun (24) contenant conjointement ladite seconde transmission hydrostatique et ledit mécanisme différentiel.

21. Véhicule (1) selon la revendication 19, dans lequel ladite seconde unité d'entraînement (22) comprend un logement contenant ladite seconde transmission hydrostatique (82), et ledit mécanisme différentiel (83) est disposé à l'extérieur dudit logement.

22. Véhicule (1) selon la revendication 1, dans lequel ladite première unité d'entraînement (21) comprend un premier mécanisme différentiel raccordant par différentiel lesdits premier et second essieux (40L, 40R), de telle sorte que la puissance de ladite première transmission hydrostatique est transmise auxdits premier et second essieux (40L, 40R) par l'intermédiaire dudit premier mécanisme différentiel, et dans lequel ladite seconde unité d'entraînement (22) comprend un second mécanisme différentiel raccordant par différentiel lesdits premier et second arbres de sortie de direction (44L, 44R), de telle sorte que la puissance de ladite seconde transmission hydrostatique est transmise auxdits premier et second arbres de sortie de direction (44L, 44R) par l'intermédiaire dudit second mécanisme différentiel.

23. Véhicule (1) selon la revendication 22, dans lequel ladite première unité d'entraînement (21) comprend un premier logement (23) contenant au moins ladite première transmission hydrostatique, et dans lequel ladite seconde unité d'entraînement (22) comprend un second logement (24) contenant au moins ladite seconde transmission hydrostatique.

24. Véhicule (1) selon la revendication 23, dans lequel ledit premier logement (23) contient ledit premier mécanisme différentiel et ledit second logement (24) contient ledit second mécanisme différentiel.

25. Véhicule (1) selon la revendication 23, dans lequel ledit premier mécanisme différentiel (81) est disposé à l'extérieur dudit premier logement, et ledit second mécanisme différentiel (83) est disposé à l'extérieur dudit second logement.

26. Véhicule (1) selon la revendication 23, dans lequel lesdites première et seconde unités d'entraînement (21, 22) sont alignées le long de la direction d'avancement dudit véhicule (1), dans lequel lesdits premier et second essieux (40L, 40R) supportés par ledit premier logement (23) sont étendus perpendiculairement à la direction d'avancement dudit véhicule (1) de manière à s'opposer l'un l'autre, et dans lequel lesdits premier et second arbres de sortie de direction (44L, 44R) supportés par ledit second logement (24) sont étendus parallèlement auxdits premier et second essieux (40L, 40R), de telle sorte que ledit premier essieu (40L) et ledit premier arbre de sortie de direction (44L) sont disposés sur un côté desdits premier et second logements (23, 24), et ledit second essieu (40R) et ledit second arbre de sortie de direction (44R) sont disposés sur l'autre côté desdits premier et second logements (23, 24).

27. Véhicule (1) selon l'une quelconque des revendications 1 à 26, dans lequel ledit véhicule (1) est pourvu d'une unité de tondeuse (9).

28. Véhicule (1) selon l'une quelconque des revendications 1 à 27, dans lequel chacune desdites première et seconde transmissions hydrostatiques comprend une pompe hydraulique (52, 71) et un moteur hydraulique (53, 72) raccordés, pour une circulation de fluide, l'un à l'autre.

29. Véhicule (1) selon la revendication 28, dans lequel lesdits moyens de fixation de puissance d'entraînement comprennent un plateau oscillant mobile (57) de ladite pompe hydraulique (52) ou dudit moteur hydraulique (53) de ladite première transmission hydrostatique.

30. Véhicule (1) selon la revendication 28 ou 29, dans lequel lesdits moyens de fixation de puissance d'entraînement comprennent un plateau oscillant mobile (76) de ladite pompe hydraulique (71) ou dudit moteur hydraulique (72) de ladite seconde transmission hydrostatique.

31. Véhicule (1) selon l'une quelconque des revendications 1 à 30, dans lequel lesdites première et seconde unités d'entraînement (21, 22) sont de structure similaire.
